Europäisches Patentamt

**European Patent Office**

Office européen des brevets

(19)

(11) Numéro de publication: **0 200 593**
**B1**

(12) # FASCICULE DE BREVET EUROPEEN

(45) Date de publication du fascicule du brevet:
**23.05.90**

(51) Int. Cl.⁵: **H04N 1/413**

(21) Numéro de dépôt: **86400632.5**

(22) Date de dépôt: **25.03.86**

(54) **Machine de saisie, de traitement et de compression de documents.**

(30) Priorité: **29.03.85 FR 8504828**

(43) Date de publication de la demande:
**10.12.86 Bulletin 86/45**

(45) Mention de la délivrance du brevet:
**23.05.90 Bulletin 90/21**

(84) Etats contractants désignés:
**DE GB IT NL**

(56) Documents cités:
**EP-A- 0 006 131**
**US-A- 4 410 916**

**IBM TECHNICAL DISCLOSURE BULLETIN,**
vol. 24, no. 3, août 1981, pages 1324-1330, New York, US;
M. KIDA et al.: "Method of image processing controlled
by number of scan/print lines being specified"
**ELECTRONIC DESIGN,**
vol. 31, no. 11, mai 1983, page 44, Waseca, US; C.
TYLER: "Image processor speeds along
with 3 processors, 2 buses"

(73) Titulaire: **Romeo, Françoise, 23, rue Henri Bourrelier,
F-91370 Verrieres le Buisson(FR)**
Titulaire: **Joly, Pascale, 42, rue de la Colonie,
F-75013 Paris(FR)**

(72) Inventeur: **Romeo, Françoise, 23, rue Henri Bourrelier,
F-91370 Verrieres le Buisson(FR)**
Inventeur: **Joly, Pascale, 42, rue de la Colonie,
F-75013 Paris(FR)**

(74) Mandataire: **Mongrédien, André et al, c/o
BREVATOME 25, rue de Ponthieu, F-75008 Paris(FR)**

## Description

La présente invention a pour objet une machine de saisie, de traitement et de compression de documents noir et blanc. Cette machine peut être utilisée dans tout processus de création d'archives électroniques. La compression par cette machine de l'information contenue dans le document à archiver permet de diminuer notablement le volume des supports de stockage par rapport à un archivage direct de ce document. La machine de l'invention a notamment pour application :

- l'archivage d'une documentation technique (Télécommunications, industries aéronautiques et automobiles, ...),
- l'archivage de bibliothèque (scientifique ou autre),
- la bureautique, et
- la communication d'entreprise (compagnies d'assurance, banques, ...).

On connaît plusieurs types de machines de saisie, de traitement et de compression de documents. Ces machines sont en général limitées à une application particulière et ne peuvent traiter qu'une catégorie de documents prédéterminés, soit par le format, soit par la nature du support physique de ce document. De plus, dans ces machines connues, la compression de l'information contenue dans le document traité est obtenue par une méthode de codage figé, spécifique de la machine et de la nature du document traité. Ces machines connues sont notamment les télécopieurs, les appareils de fac-similé de presse et les lecteurs optiques.

Un télécopieur est une machine de saisie, de traitement et de compression de documents sur support papier au format A4. L'analyse de ce document est effectuée par balayage ligne à ligne à l'aide d'une barrette de photodiodes avec une résolution de l'ordre de 8 points par mm. L'image numérique du document résultant de cette analyse est ensuite codée avant transmission. Plusieurs méthodes de codage sont employées. Une première méthode consiste à coder les longueurs des plages noires et blanches dans une ligne (code de HUFMANN modifié). Une autre méthode de codage consiste à noter les positions relatives des transitions d'une ligne par rapport la ligne précédente (code de READ). Les méthodes de codage utilisées en télécopie sont des méthodes exactes, c'est-à-dire que le code produit contient toute l'information du document d'origine. Le taux de compression, c'est-à-dire le rapport entre le nombre de bits de l'image numérisée et le nombre de bits du code, est de l'ordre de 10 à 20.

Le fac-similé de presse est un service de transmission de pages de journaux utilisé pour l'impression décentralisée des journaux. Les documents traités sont ici des pages sur support papier photographique d'un format légèrement inférieur à A2. Le document est analysé par balayage à très haute résolution, de l'ordre de 40 points par mm. L'image numérisée produite est codée par une méthode non exacte, qui exploite les longueurs de plages noire ou blanche sur des groupes de plusieurs lignes. Cette méthode non exacte produit un lissage de l'information qui n'est pas gênant dans la mesure où l'analyse du document est faite à très haute résolution.

Enfin, les lecteurs optiques sont des machines de saisie, de traitement et de compression de documents sur support papier contenant uniquement du texte dactylographié. Pour être traité correctement, le document doit satisfaire certains critères, notamment d'encrage et de contraste. La numérisation du document est suivie d'un traitement d'isolement et de reconnaissance des caractères, ce qui conduit à un codage optimum du document, par exemple par code ASCII. La reconnaissance des caractères est une technique particulière qui s'applique à des documents dactylographiés utilisant une police de caractère bien déterminée. Cette méthode est la seule à reconnaître le contenu du document et donc à conserver un certain niveau de structure. La compression obtenue est optimale.

Les machines connues qui viennent d'être décrites partagent l'inconvénient d'être limitées aux documents papier d'un format compris généralement entre A4 et A2. Elles présentent également des inconvénients spécifiques : taux de compression limité pour les machines de télécopie, nécessité d'une résolution très élevée pour les machines de fac-similé et limitation aux documents dactylographiés pour les lecteurs optiques.

Des méthodes de codage de documents ont également été proposées qui combinent la méthode de codage utilisée dans les machines de télécopie et des méthodes de reconnaissance de formes. Ce codage mixte permet, par rapport au codage utilisé en télécopie, d'obtenir un taux de compression plus important, et, par rapport au lecteur optique, de traiter tous les documents sur papier. De telles méthodes de codage sont notamment décrites dans les articles "Coding of two-level pictures by pattern matching and substitution" de O.JOHNSEN et al. paru dans The Bell system technical journal, vol.62, n°8, octobre 1983 et dans "Combined symbol matching facsimile data compression system" de W.K.PRATT et al. paru dans Proceedings of the IEEE, vol.68, n°7, juillet 1980.

A partir d'une image binaire correspondant aux documents saisis, ces méthodes de codage consistent à analyser le document pour isoler les symboles (caractères alphanumériques ou autres formes de taille limitée).

Le premier symbole est placé dans une bibliothèque; chaque symbole suivant est détecté puis comparé avec chaque symbole de la bibliothèque. Si le symbole détecté est déjà représenté dans la bibliothèque, il est simplement codé par le numéro d'identification du symbole correspondant de la bibliothèque. Dans le cas contraire, ce symbole est placé dans la bibliothèque. Chaque symbole de la bibliothèque est ensuite représenté par un code égal à l'ensemble des bits de l'image de ce symbole. Dans la méthode de PRATT et al. les éléments de l'image autres que les symboles sont codés au moyen d'une méthode de codage utilisée en télécopie (code de HUFMANN ou de READ).

Les machines connues utilisant les méthodes de codage mixte comprennent uniquement des moyens de traitement et compression mais ne comportent pas d'organe de saisie. De plus, ces machines connues sont axées vers la télécopie. Elles effectuent

une analyse ligne à ligne des documents, c'est-à-dire un traitement séquentiel et elles sont prévues pour traiter essentiellement les documents au format A4. De plus, pour certaines machines connues, notamment celles mettant en œuvre la méthode de JOHNSEN et al, la qualité de restitution des documents est dégradée. Ceci est dû au fait que les grandes formes connexes de l'image traitée sont découpées en symboles.

Un autre état de la technique est constitué par le document US-A 4 410 916. Cependant ce document décrit un dispositif de télécopie et non une machine permettant l'archivage de tout type de document.

L'invention a notamment pour but de remédier aux inconvénients et aux limitations des machines connues. Un premier objectif de l'invention est de permettre la saisie des documents de types différents, tels que des documents papier, des microfiches ou autres. La machine de l'invention est dotée à cet effet d'un ensemble d'organes de saisie qui sont chacun spécifique d'un type de document particulier.

L'invention a également pour objectif une plus grande rapidité et une plus grande souplesse de traitement des documents saisis. Cet objectif est atteint par l'utilisation d'une architecture à deux bus : un bus image et un bus de communication. Le bus image est utilisé par un dispositif d'extraction des composantes connexes de l'image numérisée correspondant aux documents saisis ; le bus de communication permet de relier ce dispositif d'extraction à un dispositif de codage qui réalise le codage des composantes connexes détectées dans l'image. Cette structure à deux bus permet de bien séparer les deux niveaux fonctionnels du traitement : la segmentation de l'image qui nécessite un accès rapide et privilégié à la mémoire d'image et les traitements spécifiques appliqués aux différents éléments extraits de l'image.

La machine de l'invention peut être du type dédié ou reconfigurable. Dans le cas où elle est dédiée à une application, les traitements effectués par le dispositif d'extraction et le dispositif de codage sont fixés et spécifiques de l'application. Une machine conçue pour traiter des textes dactylographiés ne sera alors pas adaptée par exemple au traitement de plans ou dessins.

Dans le cas où la machine peut être appelée à traiter des documents dont le contenu peut être aussi bien du texte que des dessins, il est avantageux de pouvoir reconfigurer la machine. Des moyens sont alors prévus pour modifier le traitement opéré par le dispositif d'extraction ou le dispositif de codage en fonction du document saisi, et notamment en fonction du contenu du document saisi (texte dactylographié, plan, photo ...). Ces moyens peuvent notamment réaliser un téléchargement de programmes d'extraction et de codage dans les dispositifs d'extraction et de codage.

De manière plus précise, la machine de saisie, de traitement et de compression de documents de l'invention comprend:

– un bus image pour la transmission d'au moins une partie d'une image binaire,
– un bus de communication pour la transmission de signaux de commande et pour la transmission de signaux codés représentatifs de composantes connexes de ladite image binaire,

– un moyen de saisie de documents comprenant une pluralité d'organes de saisie, une interface et éventuellement un moyen de binarisation, chaque organe de saisie étant spécifique d'un support de document et délivrant un signal d'image numérique du document saisi, ladite interface délivrant lesdits signaux d'images numériques au moyen de binarisation, ladite interface étant reliée au bus de communication, ledit moyen de binarisation étant relié au bus image et au bus de communication,

– une mémoire d'image reliée au bus image et recevant l'image binaire délivrée par le moyen de saisie,

– un dispositif d'extraction pour déterminer les composantes connexes de l'image binaire et pour classer chaque composante connexe dans une classe parmi au moins trois classes, une classe de vecteurs, une classe de symboles et une classe de non-symboles, ledit dispositif d'extraction comprenant au moins un moyen d'extraction, chaque moyen d'extraction étant composé d'un processeur d'extraction et d'une mémoire associée, chaque moyen d'extraction étant relié au bus image et au bus de communication,

– un dispositif de codage pour coder les composantes connexes, ledit dispositif de codage comprenant au moins un moyen de codage pour chaque classe, réalisant un codage spécifique des composantes connexes de l'image appartenant à cette classe, chaque moyen de codage étant composé d'un processeur de codage et d'une mémoire associée, et étant relié au bus de communication,

- un moyen de fusion, relié au bus de communication, pour regrouper les codes délivrés par le dispositif de codage et élaborer un code final,

- un moyen de commande, relié au bus de communication, comprenant un calculateur et une console de commande, pour commander les éléments reliés au bus de communication.

Le moyen de binarisation n'est nécessaire que si l'un des organes de saisie délivre un signal numérique non binaire.

De manière préférée, le dispositif d'extraction peut comprendre plusieurs moyens d'extraction identiques en parallèle, le moyen de commande gérant la répartition des tâches entre ces moyens d'extraction identiques.

De même, un ou plusieurs moyens de codage de l'ensemble de traitement peut comprendre plusieurs moyens de codage identiques en parallèle, le moyen de commande gérant la répartition des tâches entre ces moyens de codage identiques.

Cette parallélisation effectuée au niveau de l'extraction et au niveau du codage permet d'accroître la rapidité de traitement des documents saisis.

Les caractéristiques et avantages de l'invention ressortiront mieux de la description qui va suivre, donnée à titre illustratif, mais non limitatif, en référence aux dessins annexés, sur lesquels :

- la figure 1 illustre schématiquement l'architecture de la machine de saisie, de traitement et de compression de documents de l'invention, et

- la figure 2 illustre une variante de réalisation de la machine de la figure 1 permettant une parallélisation des tâches d'extraction et de codage.

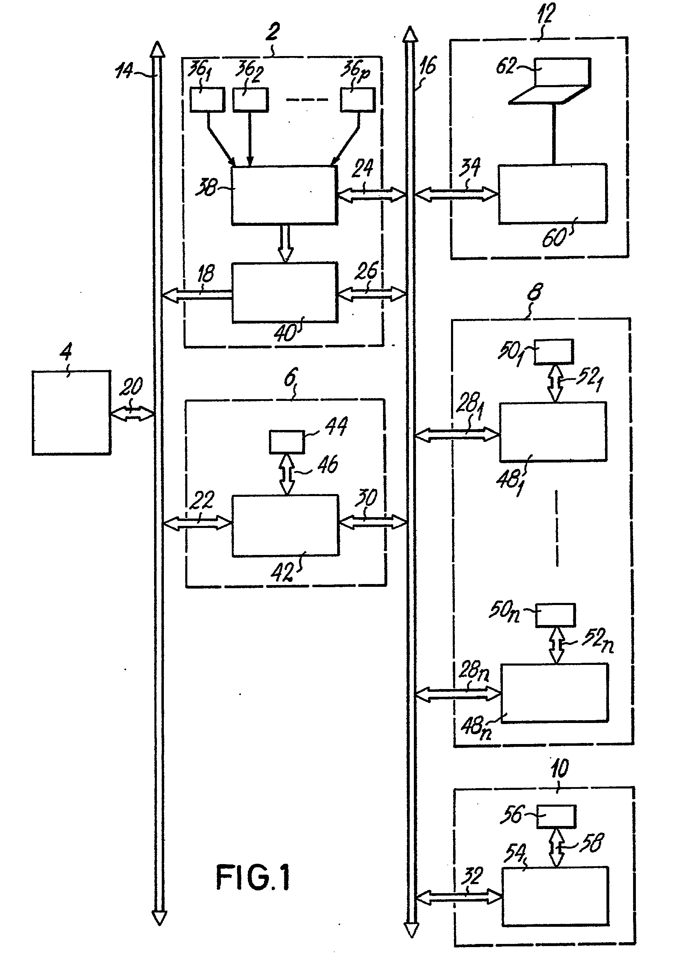

La figure 1 illustre schématiquement la structure de la machine de saisie, de traitement et de compression de documents de l'invention. Cette machine comprend principalement un moyen de saisie 2 pour saisir des documents et en produire une image binaire, une mémoire d'image 4 pour mémoriser cette image binaire, un dispositif d'extraction 6 pour analyser l'image contenue dans la mémoire d'image 4 et en extraire les composantes connexes, un dispositif de codage 8 pour coder les composantes connexes détectées par le dispositif d'extraction 6, un moyen de fusion 10 pour produire un code final à partir des différents codes élaborés par le dispositif de codage 8, et un moyen de commande 12.

La machine de l'invention s'articule autour de deux bus : un bus d'image 14 et un bus de communication 16. Chacun de ces bus est associé à un niveau fonctionnel du traitement opéré par la machine. Des voies 18, 20 et 22 relient respectivement le moyen de saisie 2, la mémoire d'image 4 et le dispositif d'extraction 6 au bus image 14. Ce bus image permet un accès rapide et privilégié à la mémoire d'image 4 par le dispositif d'extraction 6 pour la segmentation de l'image et la détection de ses composantes connexes.

Le bus de communication 16 sert au dialogue entre les différents éléments de la machine et permet l'échange des informations extraites de l'image contenue dans la mémoire 4. Des voies 24 et 26 relient le moyen de saisie 2 au bus de communication 16. De même, une pluralité de voies $28_1$ ..., $28_n$ relient le dispositif de codage 8 au bus de communication 16. Enfin, des voies 30, 32 et 34 relient respectivement le dispositif d'extraction 6, le dispositif de fusion 10 et le moyen de commande 12 au bus de communication 16.

On va maintenant décrire en détail chacun des éléments composant la machine de la figure 1. Le moyen de saisie 2 se compose d'une pluralité d'organes de saisie $36_1$, $36_2$, ..., $36_p$, d'une interface 38 reliée à chacun des organes de saisie et reliée par la voie 24 au bus de communication 16, et d'un moyen de binarisation 40 relié respectivement par les voies 18 et 26 au bus image 14 et au bus de communication 16.

Le nombre d'organes de saisie est variable. Il dépend du nombre de documents de types différents qui sont susceptibles d'être traités par la machine. Ces organes de saisie peuvent notamment comprendre un organe de saisie de documents papier, un organe de saisie de microfiches, un organe de saisie de cartes à fenêtre ou autre. La résolution d'analyse varie d'un organe de saisie à un autre. La taille de l'image numérisée peut être limitée, par exemple, à l'équivalent d'un format A0 à 8 points par mm.

L'analyse effectuée par les organes de saisie se fait en conservant les niveaux de gris du document. La binarisation de l'image est ensuite réalisée par le moyen de binarisation 40 qui reçoit, à travers l'interface 38 le document numérisé transmis par un organe de saisie. De préférence, cette binarisation est conduite en prenant en compte les caractéristiques locales des documents, afin de détecter les contrastes locaux relativement faibles et permettre ainsi d'améliorer la qualité du document saisi. L'image binarisée est stockée dans la mémoire d'image 4.

Le dispositif d'extraction 6 comprend un processeur d'extraction 42 et une mémoire 44 reliée au processeur d'extraction par une voie 46. La mémoire 44 comporte une zone d'instructions décrivant le traitement d'extraction et une zone de travail pour le stockage d'un élément de l'image binaire et son analyse. Le dispositif d'extraction a pour rôle de segmenter l'image contenue dans la mémoire d'image 4 pour en extraire les composantes connexes.

Conformément à l'invention, les composantes connexes détectées par le dispositif d'extraction sont classées dans une pluralité de classes d'éléments, les éléments d'une même classe présentant une certaine unité et étant codés selon une méthode spécifique à cette classe. Cette méthode permet en codant chaque composante connexe au moyen d'une méthode de codage adaptée à sa forme d'obtenir un taux de compression du document saisi important ; ce taux de compression est très supérieur à celui obtenu avec une unique méthode de codage.

Les composantes connexes d'un document peuvent notamment être réparties en trois classes : une classe vecteur, une classe symbole et une classe non-symbole.

Les vecteurs sont des traits verticaux, horizontaux ou obliques. Ces traits sont particulièrement nombreux dans les plans ou les dessins techniques. Ils sont détectés par balayage ligne à ligne ou colonne à colonne de l'image binaire. Les vecteurs ayant été reconnus dans l'image binaire, les composantes connexes restantes sont classées comme symbole ou non-symbole selon que leur taille est inférieure ou supérieure à une taille prédéterminée.

Différentes techniques connues peuvent être utilisées pour extraire les formes connexes, notamment l'étiquetage, le suivi de contour et le suivi de plage.

L'étiquetage consiste à étiqueter les points rencontrés au cours du balayage ligne à ligne de l'image. Les points connexes reçoivent la même étiquette. Cette méthode est notamment décrite dans l'article "A new connected components algorithm for virtual memory computers" de R. LUMIA et al. paru dans Computer Graphics and Image Processing, vol.22, 1983, pages 287 à 300.

La méthode de suivi de contour consiste à détecter les points de contour des formes connexes en examinant, pour chaque point, la configuration de son voisinage. Les principales difficultés de cette méthode proviennent du suivi des contours intérieurs et des inclusions d'objets. Une méthode de suivi de contour est décrite dans "Chain link coding and segmentation for raster scan devices" de R. CEDERBERG paru dans Computer Graphics and Image Processing, vol.10, 1979, pages 224 à 234.

Enfin, la méthode de suivi de plage consiste à détecter une plage noire sur une ligne balayée, à rechercher les plages noires connexes sur les lignes adjacentes, à les stocker dans une pile et à les effacer de l'image. Ce mécanisme est réitéré en partant des plages de la pile jusqu'à l'épuisement de la pile.

Chaque composante connexe détectée est transmise au dispositif de codage 8. Cette transmission comporte trois types d'informations :
- la position de la composante connexe dans l'image traitée,
- la description de la forme de la composante connexe qui est liée à la méthode d'extraction utilisée,
- les caractéristiques extraites en même temps que la forme et qui sont utiles au dispositif de codage telles que les dimensions de la forme (hauteur, largeur), le nombre de points noirs, le nombre de plages par ligne ou autre.

Le dispositif de codage 8 comporte au moins un moyen de codage par classe d'élément. Chaque moyen de codage comprend un processeur de codage $48_1$, ..., $48_n$ relié à une mémoire $50_1$, ..., $50_n$ par une voie $52_1$, ..., $52_n$. Chaque mémoire comporte une zone de travail et une zone contenant une suite d'instructions pour réaliser un codage des composantes connexes ; un codage spécifique est associé à chaque classe d'éléments.

Le dispositif de codage 8 peut comprendre notamment un moyen de codage associé à une classe de vecteurs, un moyen de codage associé à une classe de symboles et un moyen de codage associé à une classe de non-symboles.

Le dispositif de codage 8 de la machine de l'invention présente une plus grande souplesse que les dispositifs de codage des machines connues. En effet, le nombre de moyens de codage, c'est-à-dire le nombre de classes dans lesquelles sont réparties les composantes connexes du document traité, peut être adapté à chaque machine en fonction de son application particulière.

Deux machines dédiées des applications différentes peuvent donc comprendre des moyens de codage fixés mais qui sont différents. Pour une machine reconfigurable, le traitement effectué par le dispositif de codage peut se présenter sous forme d'un programme choisi parmi un ensemble de programmes en fonction d'une application particulière et téléchargé dans le dispositif de codage. Le choix et le téléchargement peuvent être réalisés par le moyen de commande 12.

De même, la méthode d'extraction utilisée par le dispositif d'extraction 6 peut être ajustée en fonction des documents traités. Pour une machine reconfigurable, la méthode d'extraction utilisée est re présentée par une suite d'instructions contenue dans une zone de la mémoire 44 associée au processeur d'extraction 42. Le moyen de commande 12 peut avantageusement comprendre un ensemble de méthodes d'extraction dans un moyen de mémorisation et commander l'inscription de l'une de ces méthodes d'extraction dans la mémoire d'extraction 44 en fonction des documents traités. Les choix de la méthode d'extraction et de la structure du dispositif de codage 8 doivent être compatibles.

On va décrire successivement des méthodes de codage correspondant aux classes vecteur, symbole et non-symbole. Les vecteurs reconnus sont simplement mémorisés par leurs coordonnées (origine, extrémité) et leur épaisseur. Le codage d'un symbole consiste à comprimer le nombre de bits nécessaire à sa représentation tout en préservant l'information qu'il contient. A cet effet, le codage utilise une méthode de pseudo-reconnaissance. De telles méthodes sont décrites notamment dans les articles de PRATT et al. et de JOHNSEN et al. déjà cités. De manière générale, la pseudo-reconnaissance consiste à créer au fur et à mesure de l'analyse du document une bibliothèque des symboles du document. Lorsqu'un symbole est reçu par le moyen de codage associé à la classe des symboles, trois cas peuvent se présenter :
- aucun modèle en bibliothèque ne représente le symbole reçu ; le symbole est alors ajouté dans la bibliothèque existante,
- un seul modèle en bibliothèque représente le symbole reçu,
- plusieurs modèles en bibliothèque peuvent représenter le symbole reçu ; le symbole est alors affecté au modèle le plus proche.

Un symbole est alors codé par sa position dans le document et par la référence à son représentant dans la bibliothèque.

Pour ces derniers, le codage peut consister par exemple en un code de HUFMANN ou de READ sur la matrice contenant le symbole.

Enfin, les composantes connexes de la classe des non-symboles sont codées de la même manière que les représentants des symboles. Ce code est précédé de la position et de la dimension de la composante connexe.

Les codes produits par les différents moyens de codage du dispositif de codage 8 sont ensuite transmis au moyen de fusion 10. Celui-ci comprend un processeur de fusion 54 auquel est reliée une mémoire 56 par une voie 58. Ce moyen de fusion élabore un code final à partir des codes délivrés par les moyens de codage.

Le taux de compression obtenu, c'est-à-dire le rapport entre le nombre de bits de l'image binaire contenue dans la mémoire d'image 4 et le nombre de bits de code, est en moyenne de 70. Ce taux est à comparer au taux moyen de 20 qui serait obtenu si l'image binaire était codée entièrement selon le code de READ comme c'est le cas en télécopie.

Le moyen de commande 12 représenté sur la figure 1 comprend un calculateur 60 et une console de commande 62. Ce moyen de commande gère le fonctionnement des différents éléments de la machine et permet notamment d'envoyer un ordre de saisie d'un document à un organe de saisie par l'intermédiaire de l'interface 38, de recevoir du moyen de binarisation 40 un signal indiquant que l'image binaire correspondant au document saisi est stockée dans la mémoire d'image 4, de lancer un ordre d'extraction au dispositif d'extraction 6 pour déterminer les composantes connexes de la mémoire d'image 4, de recevoir les requêtes du dispositif d'extraction 6 pour le transfert d'une composan te connexe vers un moyen de codage du dispositif de codage 8, de lancer les ordres de codage, de recevoir les requêtes de ces moyens de codage pour le transfert des codes vers le moyen de fusion 10, et de lancer les ordres de fusion.

Le moyen d'extraction comporte un processeur et une mémoire dans laquelle sont contenues des instructions qui représentent la méthode d'extraction utilisée. Dans une machine dédiée, cet ensemble d'instructions peut être contenu dans une mémoire morte. De manière préférée, dans une machine reconfigurable, cet ensemble d'instructions est contenu dans une mémoire vive. La méthode d'extraction peut ainsi être modifiée en fonction des documents saisis. La méthode d'extraction utilisée à un moment donné peut par exemple être choisie et transmise au dispositif d'extraction 6 par le moyen de commande 12 en fonction des documents saisis.

De même, les moyens de codage exécutent des procédés de codage représentés par une suite d'instructions dans une mémoire. De manière avantageuse, dans une machine reconfigurable, le procédé de codage de chaque moyen de codage ainsi que le nombre de moyens de codage utilisés est défini par le moyen de commande 12.

La machine selon l'invention représentée sur la figure 1 permet de traiter des documents de toute nature (textes dactylographiés, plans, schémas, ...) présentés sur de nombreux supports physiques différents. Dans certains cas particuliers, la rapidité de traitement de la machine peut être limitée. C'est notamment le cas lorsque le document traité comporte un nombre de composantes connexes important, par exemple s'il s'agit d'un document dactylographié dense. Pour augmenter la vitesse de traitement, le dispositif d'extraction 6 peut alors être équipé d'un ensemble de moyens d'extraction en parallèle. De même, un ensemble de moyens de codage identiques en parallèle peut être prévu pour coder chaque classe de composantes connexes.

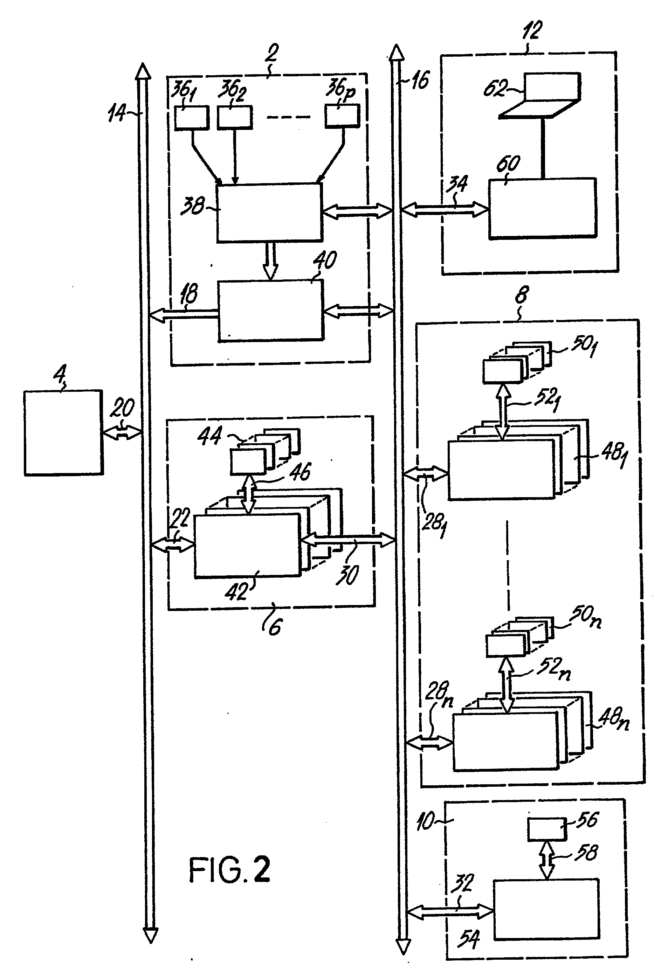

La figure 2 illustre une variante de réalisation de la machine de la figure 1 dans laquelle le dispositif d'extraction et le dispositif de codage comportent chacun une pluralité de processeurs travaillant en parallèle. Sur cette figure, les éléments identiques à ceux de la figure 1 portent les mêmes références.

## Revendications

1. Machine de saisie, de traitement et de compression de documents caractérisée en ce qu'elle comprend :
- un bus image (14) pour la transmission d'au moins une partie d'une image binaire,
- un bus de communication (16) pour la transmission de signaux de commande et pour la transmission de signaux codés représentatifs de composantes connexes de ladite image binaire,
- un moyen de saisie (2) de documents comprenant une pluralité d'organes de saisie ($36_1$, $36_2$, ..., $36_p$) et une interface (38), chaque organe de saisie étant spécifique d'un support de document et délivrant un signal d'image numérique du document saisi, ladite interface étant reliée au bus de communication, ledit moyen de saisie délivrant un signal d'image binaire sur le bus image,
- une mémoire d'image (4) reliée au bus image et recevant l'image binaire délivrée par le moyen de saisie (2),

- un dispositif d'extraction (6) pour déterminer les composantes connexes de l'image binaire et pour classer chaque composante connexe dans une classe parmi au moins trois classes, une classe de vecteurs, une classe de symboles et une classe de non-symboles, ledit dispositif d'extraction comprenant au moins un moyen d'extraction, chaque moyen d'extraction étant composé d'un processeur d'extraction (42) et d'une mémoire (44) associée, chaque moyen d'extraction étant relié au bus image et au bus de communication,
- un dispositif de codage (8) pour coder les composantes connexes, ledit dispositif de codage comprenant au moins un moyen de codage pour chaque classe, réalisant un codage spécifique des composantes connexes de l'image appartenant à cette classe, chaque moyen de codage étant composé d'un processeur de codage ($48_1$, $48_2$, ..., $48_n$) et d'une mémoire ($50_1$, $50_2$, ..., $50_n$) associée, et étant relié au bus de communication,
- un moyen de fusion (10), relié au bus de communication, pour regrouper les codes délivrés par le dispositif de codage (8) et élaborer un code final,
- un moyen de commande (12), relié au bus de communication, comprenant un calculateur (60) et une console de commande (62), pour commander les éléments reliés au bus de communication.

2. Machine selon la revendication 1, caractérisée en ce que le moyen de saisie (2) comprend en outre un moyen de binarisation (40), ledit moyen de binarisation étant relié au bus image et au bus de communication, ledit moyen de binarisation recevant les signaux d'images numériques délivrés par les organes de saisie ($36_1$, $36_2$, ..., $36_p$) à travers l'interface (38).

3. Machine selon l'une quelconque des revendications 1 et 2, caractérisée en ce que le moyen de saisie (2) comprend au moins un lecteur de microfiches, un lecteur de cartes à fenêtres et un lecteur de documents papier.

4. Machine selon l'une quelconque des revendications 1 à 3, caractérisée en ce que le dispositif d'extraction (6) comprend plusieurs moyens d'extraction identiques en parallèle, le moyen de commande (12) gérant la répartition des tâches entre ces moyens d'extraction identiques.

5. Machine selon l'une quelconque des revendications 1 à 4, caractérisée en ce que pour au moins une classe le dispositif de codage comprend une pluralité de moyens de codage identiques en parallèle, le moyen de commande (12) gérant la répartition des tâches entre ces moyens de codage identiques.

6. Machine selon l'une quelconque des revendications 1 à 5, caractérisée en ce que le moyen de commande (12) est apte à transmettre à chaque moyen d'extraction une suite d'instructions définissant la méthode d'extraction dudit moyen d'extraction, ladite méthode d'extraction étant choisie parmi une pluralité en fonction des documents saisis.

7. Machine selon l'une quelconque des revendications 1 à 6, caractérisée en ce que le moyen de commande (12) est apte à transmettre à chaque moyen de codage une suite d'instructions définissant la méthode de codage spécifique dudit moyen de codage, ladite méthode de codage étant choisie parmi une pluralité en fonction des documents saisis.

## Claims

1. Machine for the reading, processing and compression of documents, characterized in that it comprises an image bus (14) for the transmission of at least part of a binary image; a communication bus (16) for the transmission of control signals and for the transmission of coded signals representing the related components of said binary image; a means (2) for the reading of documents comprising a plurality of reading members ($36_1$, $36_2$.....$36_p$), an interface (38), each reading member being specific to a document support and supplying a digital image signal of the read document, said interface being connected to the communication bus, said reading means supplied a binary image signal to the image bus; an image memory (4) connected to the image bus and receiving the binary image supplying the reading means (2); an extraction device (6) for determining the related components of the binary image and for classifying each related component in one of at least the three classes, a vector class, a symbols class and a non-symbols class, said extraction device comprising at least one extraction means, each extraction means being formed from an extraction processor (42) and an associated memory (44), each extraction means being connected to the image bus and to the communication bus; a coding device (8) for coding the related components, said coding device incorporating at least one coding means for each class, realizing a specific coding of the related components of the image belonging to said class, each coding means being formed by a coding processor ($48_1$, $48_2$,.....$48_n$) and an associated memory ($50_1$, $50_2$.....$50_n$) and being connected to the communication bus; a merging means (10) connected to the communication bus for gathering the code supplied by the coding device (8) and developing a final code; and a control means (12) connected to the communication bus comprising a computer (60) and a control console (62) for controlling the elements connected to the communication bus.

2. Machine according to claim 1, characterized in that the reading means (2) also comprises a binarization means (40), which is connected to the image bus and to the communication bus, said binarization means receiving the digital image signals supplied by the reading means ($36_1$, $36_2$.....$36_p$) across the interface (38).

3. Machine according to either of the claims 1 and 2, characterized in that the reading means (2) comprises at least one microfiche reader, an aperture card reader and a paper document reader.

4. Machine according to any one of the claims 1 to 3, characterized in that the extraction device (6) comprises several identical extraction means in parallel, the control means (12) controlling the distribution of tasks between these identical extraction means.

5. Machine according to any one of the claims 1 to 4, characterized in that for at least one class, the coding device comprises a plurality of identical coding means in parallel, the control means (12) controlling the distribution of the tasks between these identical coding means.

6. Machine according to any one of the claims 1 to 5, characterized in that the control means (12) is able to transmit to each extraction means a sequence of instructions defining the extraction method of said extraction means, said extraction method being chosen from among a plurality thereof as a function of the documents read.

7. Machine according to any one of the claims 1 to 6, characterized in that the control means (12) is able to transmit to each coding means a sequence of instructions defining the specific coding method of said coding means, said coding method being chosen from amog a plurality thereof as a function of the documents read.

## Patentansprüche

1. Vorrichtung zum Erfassen, Verarbeiten und Komprimieren von Dokumenten, dadurch gekennzeichnet, daß sie aufweist:
   – einen Bildbus (14) zur Übertragung wenigstens eines Teils eines binären Bildes,
   – einen Kommunikationsbus (16) zur Übertragung von Steuersignalen und zur Übertragung von kodierten Signalen, die verwandte Bestandteile des binären Bildes darstellen,
   – eine Vorrichtung zur Erfassung (2) von Dokumenten mit einer Mehrzahl von Erfassungselementen ($36_1$, $36_2$, ..., $36_p$) und einer Schnittstelle (38), wobei jedes Erfassungselement für eine Dokumentstützung spezifisch ist und ein numerisches Bildsignal des erfaßten Dokuments überträgt, wobei die Schnittstelle mit dem Kommunikationsbus verbunden ist und die Erfassungsvorrichtung ein binäres Bildsignal auf den Bildbus überträgt,
   – einen Bildspeicher (4), der mit dem Bildbus verbunden ist und das binäre, von der Erfassungsvorrichtung (2) übertragene Bild empfängt,
   – eine Ausleseanordnung (6) zur Bestimmung der verwandten Bestandteile des binären Bildes und zur Klassifizierung jedes verwandten Bestandteils in eine von wenigstens drei Klassen, eine Vektorklasse, eine Symbolklasse und eine Nicht-Symbolklasse, wobei die Ausleseanordnung wenigstens eine Auslesevorrichtung aufweist, wobei jede Auslesevorrichtung aus einem Ausleseprozessor (42) und einem angeschlossenen Speicher (44) besteht und wobei jede Auslesevorrichtung mit dem Bildbus und dem Kommunikationsbus verbunden ist,
   – eine Kodierungsanordnung (8) zum Kodieren der verwandten Bestandteile, wobei die Kodierungsanordnung wenigstens eine Kodiervorrichtung für jede Klasse aufweist, die eine spezifische Kodierung der verwandten Bestandteile des zu dieser Klasse gehörenden Bildes durchführt, wobei jede Kodiervorrichtung aus einem Kodier-

prozessor ($48_1$, $48_2$, ..., $48_n$) und einem angeschlossenen Speicher ($50_1$, $50_2$, ..., $50_n$) besteht und mit dem Kommunikationsbus verbunden ist,

– eine Zusammenführungsvorrichtung (10), die mit dem Kommunikationsbus verbunden ist, zur Umgruppierung der durch die Kodierungsanordnung (8) übertragenen Kodes und zur Ausarbeitung eines endgültigen Kodes,

– eine Steuervorrichtung (12), die mit dem Kommunikationsbus verbunden ist und einen Rechner (60) und eine Steuerkonsole (62) zum Steuern der mit dem Kommunikationsbus verbundenen Elemente aufweist.

2. Vorrichtung nach Anspruch 1, dadurch gekennzeichnet, daß die Erfassungsvorrichtung (2) zusätzlich eine Binarisierungsvorrichtung (40) aufweist, wobei diese Binarisierungsvorrichtung mit dem Bildbus und dem Kommunikationsbus verbunden ist und die digitalisierten, von den Erfassungselementen ($36_1$, $36_2$, ..., $36_p$) übertragenen Bildsignale über die Schnittstelle (38) empfängt.

3. Vorrichtung nach einem der Ansprüche 1 und 2, dadurch gekennzeichnet, daß die Erfassungsvorrichtung (2) wenigstens ein Mikrofilmlesegerät, ein Fensterkartenlesegerät und ein Papierdokumentenlesegerät aufweist.

4. Vorrichtung nach einem der Ansprüche 1 bis 3, dadurch gekennzeichnet, daß die Ausleseanordnung (6) mehrere identische, parallele Auslesevorrichtungen aufweist, wobei die Steuervorrichtung (12) die Aufgabenteilung unter diesen identischen Auslesevorrichtungen vornimmt.

5. Vorrichtung nach einem der Ansprüche 1 bis 4, dadurch gekennzeichnet, daß für wenigstens eine Klasse die Kodierungsanordnung eine Mehrzahl von identischen, parallelen Kodiervorrichtungen aufweist, wobei die Steuervorrichtung (12) die Aufgabenteilung unter diesen identischen Kodiervorrichtungen vornimmt.

6. Vorrichtung nach einem der Ansprüche 1 bis 5, dadurch gekennzeichnet, daß die Steuervorrichtung (12) geeignet ist, jeder Auslesevorrichtung eine Folge von Anordnungen zu übermitteln, die das Ausleseverfahren der Auslesevorrichtung bestimmen, wobei das Ausleseverfahren aus einer Mehrzahl von Verfahren in Abhängigkeit der erfaßten Dokumente ausgewählt wird.

7. Vorrichtung nach einem der Ansprüche 1 bis 6, dadurch gekennzeichnet, daß die Steuervorrichtung (12) geeignet ist, jeder Kodiervorrichtung eine Folge von Anordnungen zu übermitteln, die das Kodierverfahren der Kodiervorrichtung bestimmen, wobei das Kodierverfahren aus einer Mehrzahl von Verfahren in Abhängigkeit der erfaßten Dokumente ausgewählt wird.

FIG.1

FIG.2